# EUROPEAN PATENT APPLICATION

(11) **EP 1 553 770 A1**
(43) Date of publication of application: **13.07.2005**
(21) Application number: 03756630.4
(22) Date of filing: 15.10.2003
(51) Int. Cl.: H04N 5/91

(54) **MOBILE TERMINAL, PRINTING DEVICE, IMAGE PRINTING SYSTEM, AND THUMBNAIL CREATION DEVICE**

(30) Priority: 16.10.2002 JP 2002302070
(71) Applicant: MATSUSHITA ELECTRIC INDUSTRIAL CO., LTD., Kadoma-shi, Osaka 571-8501 (JP)
(72) Inventor: TAKAMINE, Kouichi, Kawanishi-shi, Hyogo 666-0015 (JP); TERADA, Hiroshi, Ikoma-shi, Nara 630-0122 (JP)
(74) Representative: Dempster, Benjamin John Naftel
(86) International application number: PCT/JP2003/013220
(87) International publication number: WO 2004/036905

(57) **Abstract**

The portable terminal comprises: a control unit that pairs up created thumbnail images with image identifiers that identify the image data, which is the source of the thumbnail images, and stores them in a memory unit that is accessible even when the portable recording medium is removed; and a communication unit that sends an image identifier that corresponds to a selected thumbnail image together with a printing instruction for printing image data that corresponds to the image identifier. Also, a printing apparatus comprises a communication unit that receives a medium identifier, image identifier and printing instruction, and a medium-identifier-judgment unit determines whether or not the medium identifier of a portable recording medium mounted in a mounting unit matches the medium identifier received by the communication unit. When the medium identifiers match, a printing unit follows the printing instruction and prints the image data from the mounted portable recording medium.

## Description

### Technical Field

This invention relates to a portable terminal that sends an instruction to print an image based on an operation from a user, a printing apparatus that prints an image based on the printing instruction from that portable terminal, and a thumbnail-creation apparatus that creates thumbnail images.

### Background Art

In recent years, portable terminals such as portable phones and the like that have a digital camera and photographic function have become very widespread, and they are becoming more and more sophisticated. When the user connects the portable terminal to a printing apparatus, the image data can be uploaded to the printing apparatus and images taken with this kind of portable terminal can then be printed by that printing apparatus. It is also possible for the user to store image data taken by the portable terminal on a portable-type of recording medium (hereafter, simply referred to as recording medium), and by mounting or connecting that recording medium to a printing apparatus, the image data can be uploaded to the printing apparatus and the image can be printed by that printing apparatus.

When printing an image taken by the portable terminal, the user may want to select a certain image from a plurality of images and print that image. Therefore, in order that the user may look at all of the images taken by the portable terminal at one time, the printing apparatus has a function for creating small images (hereafter called thumbnail images) for all of those images. Those thumbnail images can be printed using the printing apparatus, or by the user connecting that printing apparatus to a monitor, the user can display the thumbnail images on that monitor. By viewing all of the thumbnail images that are displayed, the user can check the contents of all of the images taken by the portable terminal. Also, by wirelessly (using infrared communication such as IrDA protocol) sending the thumbnail images from the printing apparatus to the portable terminal and displaying the thumbnail images on the display unit such as the liquid-crystal display of the portable terminal, the user can check the contents of all of the images taken by the portable terminal.

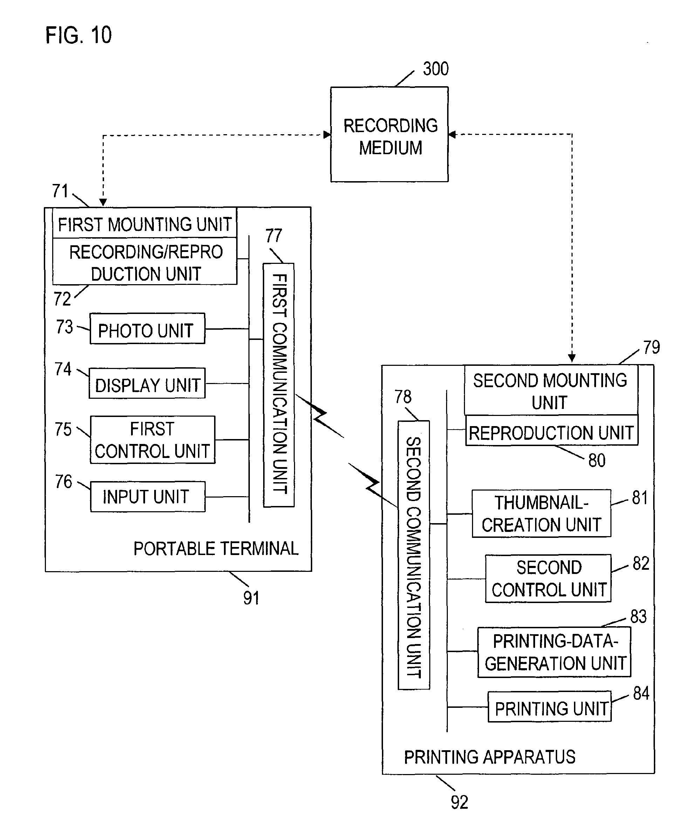

Next, Fig. 10 will be used to explain an image printing system comprising a printing apparatus that wirelessly sends thumbnail images to the portable terminal, and a portable terminal that displays the thumbnail images by a display unit.

In that image-printing system, when the user mounts a specified recording medium 300 in a first mounting unit 71 of the portable terminal 91 and photographs an image in that state using the photo unit 73, that image data, together with an identifier for that image (image identifier), are recorded on the recording medium 300 by a recording/reproduction unit 72. To print an image corresponding to data recorded on the recording medium 300, the user removes the recording medium 300 from the first mounting unit 71 of the portable terminal 91 and mounts it in the second mounting unit 79 of the printing apparatus 92.

After the recording medium 300 has been mounted in the second mounting unit 79, a second control unit 82 in the printing apparatus 92 controls the reproduction unit 80 to reproduce all of the image data stored on the recording medium 300. The thumbnail-creation unit 81 then uses the image data that is reproduced in this way, and creates all of the thumbnail images that correspond to the data stored on recording medium 300. After the thumbnail images have been created, the second control unit 82 wirelessly sends the created thumbnail images, together with image identifiers that correspond to those thumbnail images, to the portable terminal 91 via a second communication unit 78.

Those thumbnail images and image identifiers, are received by the portable terminal 91 via a first communication unit 77, and by an operation from the user, thumbnail images of all of the images corresponding to the data stored on the recording medium are paired with corresponding image identifiers and are displayed in order by the display unit 74. By viewing all of the thumbnail images that are displayed by the display unit 74, the user is able to select a certain image to be printed.

When the user actually selects the image to print, if the thumbnail image of the image to print is displayed by the display unit 74, the user enters a printing instruction to the input unit 76, however if the thumbnail of the image to print is not displayed, the user performs an operation again for displaying the thumbnail image of the image to print on the display unit 74, and when that thumbnail image is displayed on the display unit 74, the user enters a printing instruction to the input unit 76. The user can also enter the image identifier corresponding to the thumbnail image of the selected image to be printed, together with a printing instruction, to the input unit 76. By doing so, the first control unit 75 wirelessly sends the image identifier of the image to print and the printing instruction to the printing apparatus 92 via the first communication unit 77.

In the printing apparatus 92, the second communication unit 78 receives the image identifier and printing instruction from the portable terminal 91, and the second control unit 82 controls the reproduction unit 80 such that it reproduces the image data from among the data recorded on the recording medium 300 mounted in the second mounting unit 89 that corresponds to the image identifier received by the second communication unit 78. After that image data has been reproduced, the printing-data-generation unit 84 creates printing data based on that reproduced data, and the printing unit 83 uses that printing data to print the image corresponding to the image identifier. The user is able to print the selected image in this way.

The image data photographed by the photo unit 73 of the portable terminal 91 may also be uploaded to the printing apparatus 92 by sending it wirelessly or over a communication line from the portable terminal 91 to the printing apparatus 92 instead of uploading it to the printing apparatus 92 via a recording medium 300.

Moreover, it is also possible to mount the recording medium 300 directly or indirectly into the printing apparatus 92 instead of mounting it in the second mounting unit 79 of the printing apparatus, and then upload the image data recorded on the recording medium 300 to the printing apparatus 92 (For example, refer to Japanese unexamined patent publication No.2002-125175).

Furthermore, an image-data-processing system, which stores an image photographed by a digital camera or photo unit and then creates a thumbnail image for that image and sends it to the digital camera, and which receives a processing instruction related to a specific image from the digital camera based on the thumbnail image, has been proposed (For example, refer to Japanese unexamined patent publication No.2000-341618). The image-data-processing system that received the instruction performs various processing corresponding to the instruction by an external processing unit such as a server.

However, in this image-printing system, the printing apparatus 92 has only one second mounting unit 79 and cannot perform a plurality of processes at the same time. Therefore, when the user is using the data stored on one recording medium 300x to print an image, it is not possible at the same time to create thumbnail images corresponding to data stored on another recording medium 300y.

In this image-printing system, when the printing apparatus 92 is printing an image in this way, there is a problem in that it is not possible to create thumbnail images at the same time as that printing process.

Also, in this image-printing system, after the recording medium 300 has been mounted into the second mounting unit 89 of the printing apparatus 92, the printing apparatus 92 creates thumbnail images, however, even though those thumbnail images may be stored only temporarily, those thumbnail images are deleted when the recording medium 300 is removed from the second mounting unit 89. Therefore, when the same recording medium 300 is mounted in the second mounting unit 89 again, the thumbnail images are created again, and the user is unable to view those thumbnail images until after that.

Furthermore, in the case of performing various processes related to creating thumbnail images or specific images by a server like the graphic-data-processing system concerning the above-mentioned Japanese unexamined patent publication No.2000-341618, a communication fee or server-utilization fee for communication between the server and portable terminal is necessary. Also, needless to say, a contract with an ISP (Internet Services Provider) that provides this kind of service is necessary, or it is necessary to have a server having this kind of function in the network. Therefore, even though this kind of system has the advantage that image processing can be performed during travel or the like, the cost burden to the user increases. Also, when the portable terminal is a digital camera or the like and there is no communication function using a telephone line on the side of the portable terminal, it is not possible to create a system using a server, so it necessary for the digital camera to have a communication function.

Taking the problems mentioned above into consideration, it is the object of this invention to provide an image-printing system that is capable of creating thumbnail images at the same time as a printing process even when a printing apparatus, which is not able to perform a plurality of processes at the same time, is printing an image; and a portable terminal and printing apparatus of this image-printing system.

Moreover, another object of this invention is to provide a thumbnail-creation apparatus that controls the creation of thumbnail images depending on whether a recording medium, which is the same as the recording medium on which original image data is stored and which is the source of thumbnail images that are created and stored by the portable terminal without using a server, is mounted or whether a different recording medium is mounted.

### Disclosure of Invention

In order to accomplish the aforementioned objectives, this invention uses the units described below. It is presumed that the portable terminal of this invention is capable of creating thumbnail images that correspond to image data stored on a portable-type recording medium and is capable of displaying the images for selection. Here, the portable terminal comprises: a control unit that pairs up created thumbnail images with image identifiers that identify the original image data, and stores the pairs in a memory unit that can be accessed even after the portable-type recording medium has been removed; and a communication unit that sends a the image identifier that corresponds to a selected thumbnail image together with a printing instruction to print the image data corresponding to that image identifier.

Moreover, the control unit reads a medium identifier from the portable-type recording medium that stores the original image data of the thumbnail images that can clearly identify the portable recording medium, and relates that medium identifier with the thumbnail images and image identifiers and stores it in a memory unit, and the transmission unit sends this medium identifier together with the image identifier and printing instruction.

The printing instruction contains parameter information related to printing.

Furthermore, it is presumed that the printing apparatus of this invention comprises a mounting unit in which a portable recording medium can be mounted or removed. This printing apparatus comprises a communication unit that receives the medium identifier, image identifier and printing instruction, and a medium-identifier-judgment unit determines whether or not the medium identifier of the portable recording medium mounted in the mounting unit matches the medium identifier received by the communication unit. Here, when the medium identifiers match, the printing unit follows the printing instruction and prints the image data corresponding to the image identifier received from the mounted portable recording medium.

It is also possible for the communication unit to be constructed such that it accepts (receives) printing instructions only when the portable recording medium is mounted in the mounting unit, or to be constructed such that it accepts (receives) printing instructions even when there is no portable recording medium mounted in the mounting unit. Furthermore, it is also possible for the communication unit to be constructed such that it can be switched based on specified conditions between the two types of construction described above.

The image-printing system of this invention comprises a portable terminal and printing apparatus.

Moreover, the printing-instruction method of this invention comprises: a thumbnail-creation step of creating thumbnail images; a control step that pairs up created thumbnail images with image identifiers that identify the original image data, and stores the pairs in a memory unit that can be accessed even after the portable recording medium on which the image data is recorded has been removed; a display step of displaying the stored thumbnail images such that they can be selected; and a transmission step of sending the image identifier that corresponds to the selected thumbnail image together with the printing instruction for printing the image data corresponding to that image identifier.

Furthermore, the printing method of this invention comprises: a receiving step of receiving a medium identifier that is capable of clearly identifying a portable recording medium, an image identifier that identifies image data, and a printing instruction for printing image data; a medium-identifier-judgment step of determining whether or not the medium identifier of the portable recording medium mounted in a specified mounting unit matches the received medium identifier; and a printing step of following the printing instruction and printing the image data that corresponds to the image identifier received from the mounted portable recording medium when the medium identifiers match.

The image-printing method of this invention comprises the aforementioned printing-instruction method and printing method.

It is also possible to realize each of the units described above by executing the aforementioned steps as a program on a computer.

Furthermore, the thumbnail-creation apparatus of this invention comprises: a mounting unit in which the portable recording medium is mounted; a thumbnail-creation unit that creates thumbnail images of the image data; a memory unit that stores the original image data of the thumbnails created by the thumbnail-creation unit, or pairs it up with a stored medium identifier for the portable recording medium; an identifier-judgment unit that determines whether or not the medium identifier of the portable recording medium mounted in the mounting unit matches any of the medium identifiers stored in the memory unit; and a control unit that controls at least the thumbnail-creation unit based on the judgment result of the identifier-judgment unit.

Also, the thumbnail-creation method of this invention comprises: a thumbnail-creation step of creating thumbnail images of image data; a memory step of storing the original image data of the thumbnails created by the thumbnail-creation unit, or pairing it up with a stored medium identifier for the portable recording medium; an identifier-judgment step of determining whether or not the medium identifier of the portable recording medium mounted in the mounting unit matches any of the medium identifiers stored in the memory unit; and a control step of controlling at least the thumbnail-creation unit based on the judgment result of the identifier-judgment unit.

Also, it is also possible to realize the thumbnail-creation apparatus on a computer by executing each of the steps above as a program on a computer.

### Brief Description of Drawings

Fig. 1 is a schematic diagram of the image-printing system in a first embodiment of the invention.
Fig. 2 is a drawing explaining the operating procedure of the image-printing system in the first embodiment of the invention.
Fig. 3 is a drawing explaining the data transmitted in the image-printing system in the first embodiment of the invention.
Fig. 4 is a schematic diagram of the image-printing system in a second embodiment of the invention.
Fig. 5 is a drawing explaining the operating procedure of the image-printing system in the second embodiment of the invention.
Fig. 6 is a schematic diagram of the image-printing system in a third embodiment of the invention.
Fig. 7 is a drawing explaining the operating procedure of the image-printing system in the third embodiment of the invention.
Fig. 8 is a schematic diagram of the thumbnail-creation apparatus in a fourth embodiment of the invention.
Fig. 9 is a drawing explaining the operating procedure of the thumbnail-creation apparatus in the fourth embodiment of the invention.
Fig. 10 is a schematic diagram of a prior image-printing system.

### Best Mode for Carrying Out the Invention

The preferred embodiments of the invention will be explained with reference to the drawings.

### (Embodiment 1)

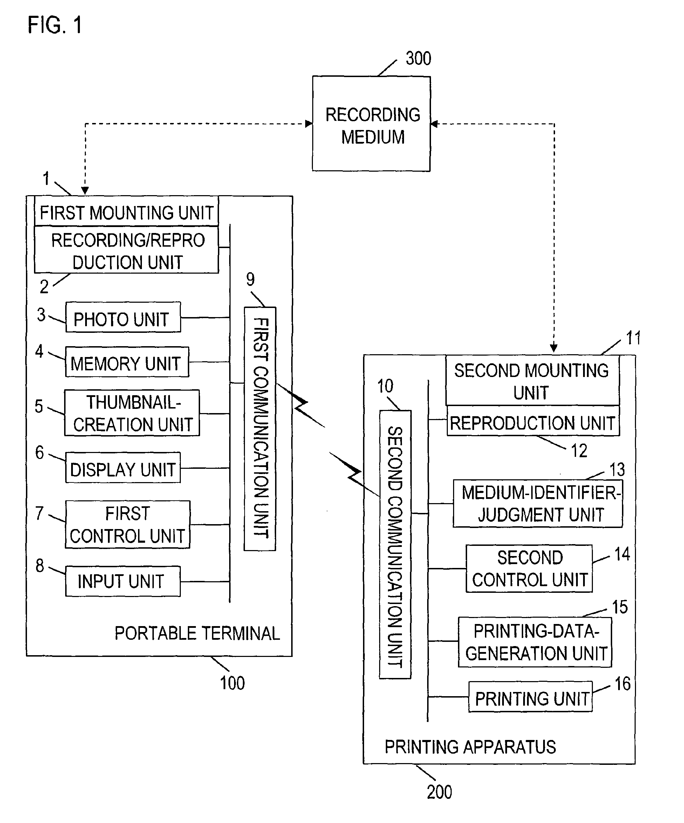

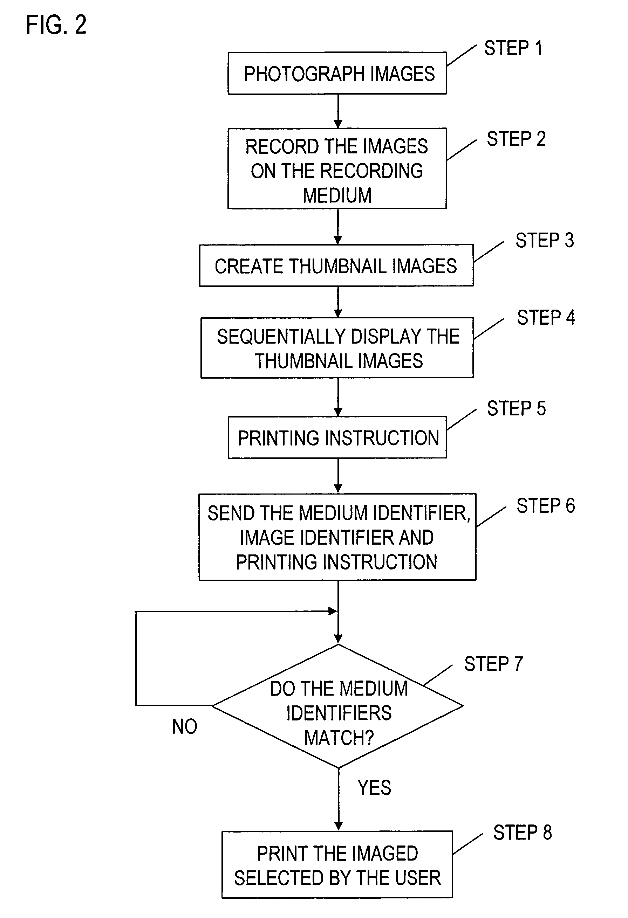

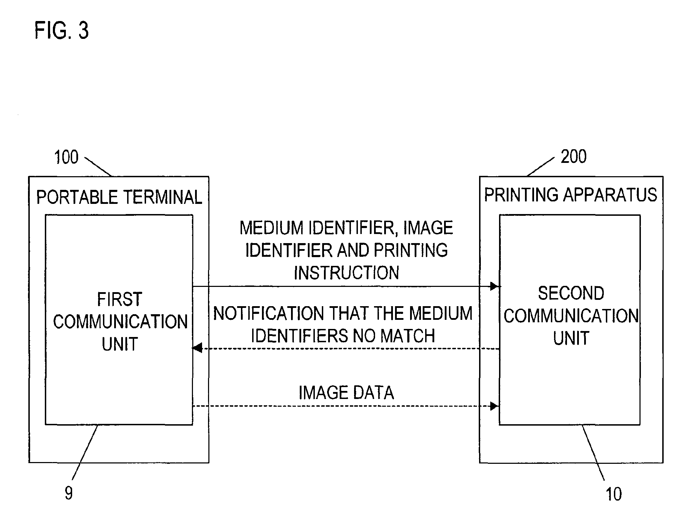

First, the construction and operation of the image-printing system of a first embodiment of the invention will be explained. Fig. 1 shows the construction of the image-printing system of this first embodiment, Fig. 2 shows the operating procedure of that image-printing system, and Fig. 3 explains the transmitted data.

As shown in Fig. 1, the image-printing system of this first embodiment comprises: a portable terminal 100 that has a photographic function as well as a function for recording photographed image data on a recording medium 300; and a printing apparatus 200 that uses the data stored on the recording medium 300 to print an image. Data transmission between the portable terminal 100 and the printing apparatus 200 is performed wirelessly (for example, by infrared communication using IrDA protocol), and the recording medium 300 is a means of storing data such as a SD (Secure Digital) card (R), and as will be described later, it is such that it can be mounted in either the portable terminal 100 or printing apparatus 200.

It is possible to use a digital camera or a portable telephone or PDA (Personal Digital Assistant) having a digital camera photographic function as the portable terminal 100.

To photograph an image using the portable terminal 100, the user mounts a first recording medium 300a in a first mounting unit in the portable terminal 100, and aims the lens of the photo unit 3 at the object to be photographed and presses the photo button located on the casing of the portable terminal 100. By doing this, a photo instruction is input to the input unit 8, and the photo unit 3 photographs the image according to that photo instruction and gives an identifier (image identifier) to the photographed image that identifies the image (Fig. 2, step 1). Also, a first control unit 7 pairs that photographed image data with the corresponding image identifier and stores that pair in the memory unit 4, and, by way of a recording/reproduction unit 2 (one example of record means), it records the pair of the photographed image data and corresponding identifier on the first recording medium 300a that is mounted in the first mounting unit 1 (Fig. 2, step 2). The image identifier can be a file name attached to the image data, or can be information, or in other words DPOF (Digital Print Order Format), such as image-source data, the image size, title, timing setting, apparatus information, date and time, user name, address or telephone number contained in the image data.

In this way, a plurality of image data, which is photographed by the photo unit 3 and paired up with corresponding image identifiers, is stored in the memory unit 4, and is also recorded on the first recording medium 300a.

Then, when the user desires to print a certain image from among the plurality of images photographed using the portable terminal 100, the user may want to view thumbnail images of all of those images in order to select the image to be printed. In that case, the user selects 'Create Thumbnails' from the menu displayed on the display unit 6 to enter a thumbnail-creation instruction to the input unit 8, and sequentially displays the thumbnail images of those images on the display unit 6, such as a liquid-crystal display, in order to check the contents of the images.

The first control unit 7 receives this instruction, and by way of the recording/reproduction unit 2, sequentially reproduces the image data and the image identifiers paired with those images that are recorded on the first recording medium 300a mounted in the first mounting unit 1. A thumbnail-creation unit 5 uses the reproduced data to sequentially create thumbnail images that correspond to all of the image data stored on the first recording medium 300a (Fig. 2, step 3). Also, the first control unit 7 pairs all of the created thumbnail images with the corresponding image identifiers and stores them in the memory unit 4 which is different from the first recording medium 300a. When doing this, the first control unit 7 also reads the medium identifier, which is given to the first recording medium 300a mounted in the first mounting unit 1, from the first recording medium 300a by way of the recording/reproduction unit 2. Furthermore, the first control unit 7 stores that medium identifier, together with the thumbnail images created from the first recording medium 300a to which that medium identifier is attached, in a specified folder (for example a folder whose folder name is that medium identifier). Here, the medium identifier is an ID or the like that can clearly identify the medium. After the thumbnail-creation unit 5 has finished creating thumbnail images corresponding to all of the image data stored on the first recording medium 300a, the first control unit 7 displays a notice on the display unit 6 indicating that the thumbnails have been created. After the notice has been displayed, the user can remove the first recording medium 300a from the first mounting unit 1 of the portable terminal 100 and mount it in a second mounting unit 11 of the printing apparatus 200. That is, once the thumbnail images have been created, they are saved in a different memory unit, so the original image data is no longer absolutely necessary.

After the thumbnail images corresponding to all of the image data have been created in this way, the first control unit 7 can read the thumbnail image corresponding to the first image data recorded on the first recording medium 300a together with the corresponding image identifier from the memory unit 4, and pair the thumbnail image with that image identifier and display them on the display unit 6. Also, by pressing the sequential-thumbnail-display button on the casing of the portable terminal 100, the user can display the thumbnail image corresponding to the second image data recorded on the first recording medium 300a on the display unit 6.

By the user pressing the sequential-thumbnail-display button in this way, the thumbnail images stored in the memory unit 4 are read in the order that they were recorded on the recording medium 300a together with the corresponding image identifiers, and they are displayed in order by the display unit 6 together with the image identifiers (Fig. 2, step 4). In this way, the user can view all of the thumbnail images corresponding to the image data stored on the first recording medium 300a, and can select an image to print even when the recording medium 300a is not mounted.

Next, in order to actually select the image to print, the user presses the sequential-thumbnail-display button and displays the thumbnail corresponding to the image to print on the display unit 6. Also, by selecting 'Printing Instruction' from the displayed menu, the user enters a printing instruction to the input unit 8 (Fig. 2, step 5), or the user enters the image identifier corresponding to the image to be printed and the printing instruction to the input unit 8 (Fig. 2, step 5).

Then the first control unit 7 reads the medium identifier that corresponds to the selected thumbnail from the memory unit 4, and sends that medium identifier, the image identifier of the image to be printed, and the printing instruction to the printing apparatus 200 wirelessly by way of the first communication unit 9 (Fig. 2, step 6, Fig. 3). The printing apparatus 200 receives the sent medium identifier, image identifier and printing instruction by way of the second communication unit 10.

Next, after the second communication unit 10 receives the medium identifier, image identifier and printing instruction from the portable terminal 100, a second control unit 14 reads the medium identifier of the medium 300 mounted in a second mounting unit 11 by way of the reproduction unit 12. After the medium identifier has been read, a medium-identifier-judgment unit 13 determines whether or not the medium identifier received by the second communication unit 10 matches the medium identifier of the recording medium 300 mounted in the second mounting unit 11 (Fig. 2, step 7).

Here, when the medium-identifier-judgment unit 13 determines that the identifiers match, it sends notification of that to the second control unit 14, printing-data-generation unit 15 and printing unit 16, and by way of the reproduction unit 12, the second control unit 14 reproduces the image data from among the data stored on the first recording medium 300a mounted in the second mounting unit 11 that corresponds to the image identifier received by the second communication unit 10. Also, the printing-data-generation unit 15 creates printing data for the image according to the reproduced image data, and the printing unit 16 prints that image according to that printing data (Fig. 2, step 8). In this way, the user uses the portable terminal 100 to print a selected image.

As described above, in the image-printing system of this embodiment, the portable terminal 100 creates thumbnail images, and stores them in a different memory unit than the original image data of the thumbnail images. Also, thumbnail images that have one been stored are not lost even when the memory unit in which the image data is stored is removed. Therefore, in cases where the printing apparatus 200 is printing image data stored on a first recording medium, the user can view all of the thumbnail images that have been stored in a memory unit and select an image to be printed without having to wait for a process being performed by the printing apparatus to end first. Of course it is also possible to create new thumbnail images from a recording medium different than the first recording medium.

In the printing apparatus it is possible to accurately identify the image data to be printed by the medium identifier and image identifier, so image data to be printed do not get mixed up. Therefore, even when the recording medium is not inserted, it is possible to receive a printing instruction beforehand. Image data do not get mixed up even in this case so, it is possible to execute the printing instruction without any trouble. This is useful when one person has a plurality of recording media, or when the printing apparatus is shared.

When a recording medium 300, which does not store the image data to be printed, is mounted in the second mounting unit 11, the medium-identifier-judgment unit 13 will not determine a match, so the second control unit 14 sends a notification of that fact wirelessly to the portable terminal 100 by way of the second communication unit 10 (see Fig. 3). The portable terminal receives that notification by way of the first communication unit 9, and then the first control unit 7 displays the notification message on the display unit 6 that a recording medium 300, which does not contain the image data to be printed, is mounted in the second mounting unit 11. For example, a message such as 'Not the correct recording medium' is displayed on the display unit 6.

After receiving this notification, the user removes the currently mounted recording medium 300 from the second mounting unit 11 in the printing apparatus 200, and mounts the recording medium 300 that stores the image data to be printed in the second mounting unit 11. After this new recording medium 300 has been mounted in the second mounting unit 11, the second control unit 14, by way of the reproduction unit 12, reads the medium identifier for the newly mounted recording medium 300. The process then returns to the step (Fig. 2, step 7) in which the medium-identifier-judgment unit 13 determines whether or not that read medium identifier matches the medium identifier already received by way of the second communication unit 10.

When a recording medium is not inserted within a specified amount of time after the medium identifier, image identifier and printing instruction have been received from the portable terminal, the printing apparatus 200 displays a notification message to insert the recording medium, for example, it displays a message such as 'Insert the recording medium' on the display unit 6. Also, it is possible to cancel the received (accepted) printing instruction when the recording medium has still not been inserted after a further specified amount of time. In that case, it is possible to delete information such as the medium identifier and image identifier for that printing instruction at the same time that the printing instruction is cancelled. By doing this, it is possible to prevent not being able to receive (accept) and execute a new printing instruction due to a continued state of waiting for printing after a printing instruction as been received and the recording medium has not been inserted.

On the other hand, in the case of a shared printing apparatus, it is possible for the printing apparatus to be constructed such that it receives (accepts) the printing instruction for the first time when the recording medium is inserted. By receiving (accepting) the instruction after the recording medium is inserted, it is clear which user is currently using the printing apparatus, and thus it is possible to avoid confusion due to sharing.

Furthermore, it is also possible to construct the printing apparatus such that it is possible to switch between the construction of not receiving (accepting) a printing instruction where no recording medium is inserted, and the construction of receiving (accepting) a printing instruction even when no recording medium is inserted.

One example is construction in which the default setting of the shared printing apparatus is set to not receive a printing instruction when no recording medium is inserted, and when input for the number of recording media to be handled is received from the user, for example, the setting is switched to receive printing instructions even when no recording medium is inserted. When only one recording medium is used, the setting remains as the default setting to not receive a printing instruction when no recording medium is inserted, and when a plurality of recording media are used, the setting is switched to receive (accept) printing instruction even when no recording medium is inserted.

By doing this, not only is it possible to avoid confusion due to sharing, but it is also has the merit as described above of being able to receive printing instructions when no recording medium is inserted after it has been determined which user will use the shared printer.

Also, when a printing instruction is cancelled and information such as the medium identifier and image identifier for the printing instruction is deleted, it is possible to send a notification message, such as 'The printing instruction was cancelled' to the portable terminal that was the source of the printing instruction. By doing this, it is possible for the user on the side of the portable terminal that sent the printing instruction to know that the printing instruction was cancelled. Instead of the display it is also possible to notify the user with sound from a speaker on the portable terminal 100.

Also, in the case of the printing apparatus 200 receiving a plurality of printing instructions from a plurality of portable terminals or a single portable terminal, information indicating the current processing status, for example, a message such as, 'Job number --- is in progress' and/or 'Your job number is ---', can be sent to the portable terminals that are the sources of the respective printing instructions. By doing this, it is possible for the users of the portable terminals that sent printing instructions to know whether or not the sent printing instruction was received, and/or to know what number in the order the printing instruction was received.

Moreover, instead of sending a message from the printing apparatus 200 to the portable terminal 100 notifying that a printing instruction was cancelled or indicating the current processing status, it is also possible to display a message on a display unit located on the printing apparatus 200. By doing so, it is possible to for the user to know that a printing instruction was cancelled or know the current processing status even in the case where only one-way communication from the portable terminal 100 to the printing apparatus 200 is possible.

Also, in the embodiment described above, when the medium-identifier determines that there is no match (Fig. 2, step 7), information indicating that fact is displayed on the display unit 6, and the user can know that the recording medium 300 that stores the image data to be printed is mounted in the second mounting unit 11 in the printing apparatus 200. However, the user can also input an instruction to the input unit 8 of the portable terminal 100 to send the image data, which is stored in the memory unit 4 and which is to be printed, to the printing apparatus 200. In that case, the first control unit 7 reads the image data stored in the memory unit 4 that is to be printed, and sends the read image data to the printing apparatus 200 by way of the first communication unit 9 (see Fig. 3). In this case as well, the image to be printed is printed by the printing apparatus 200.

It is also possible to have it such that only when it is determined in the judgment step by the medium-identifier-judgment unit 13 (Fig. 2, step 7) that there is no match, no image data to be printed is sent from the portable terminal 100 to the printing apparatus 200, and to also have it such that image data to be printed is sent to the printing apparatus 200 when the user enters a printing instruction in the input unit 8 of the portable terminal 100 (Fig. 2, step 5). In this way, it is possible for the user to save time required for moving the recording medium 300 to a printing apparatus 200 and mounting it in the second mounting unit 11 in that printing apparatus 200.

Sending the image data to be printed from the portable terminal 100 to the printing apparatus 200 is restricted to when the amount of data is less than a specified threshold value in comparison to the communication rate, and when the amount of data is greater than the specified threshold value, the amount of time to transmit the data becomes long so it is preferred that the user mount the recording medium 300 on which the image data to be printed is stored into the second mounting unit 11 in the printing apparatus 200. Therefore, when the amount of image data to be printed is greater than the threshold value, it is desirable that a notification of that fact be displayed on the display unit 6 of the portable terminal 100.

Also, in the embodiment described above, communication of data between the portable terminal 100 and the printing apparatus 200 was performed wirelessly such as unidirectional infrared communication according to IrDA protocol, however, the communication method is not particularly limited and communication can also be a method according to a wired protocol such as IEEE1394, USB or IP, or according to a wireless protocol such as wireless LAN, Blue Tooth, or could be according to some infrared protocol. However, when transmitting data by infrared communication according to the IrDA protocol, unidirectional communication is not possible, but it has the merit in that the communication cost can be reduced.

Also, in the embodiment described above, the first communication unit 9 in the portable terminal 100 and the second communication unit 10 in the printing apparatus 200 both had a sending and receiving function. However, it is possible for both the first communication unit 9 and second communication unit 10 or just one to comprise a sending unit that can only send data (for example sending data by infrared communication), and a receiving unit that can only receive data.

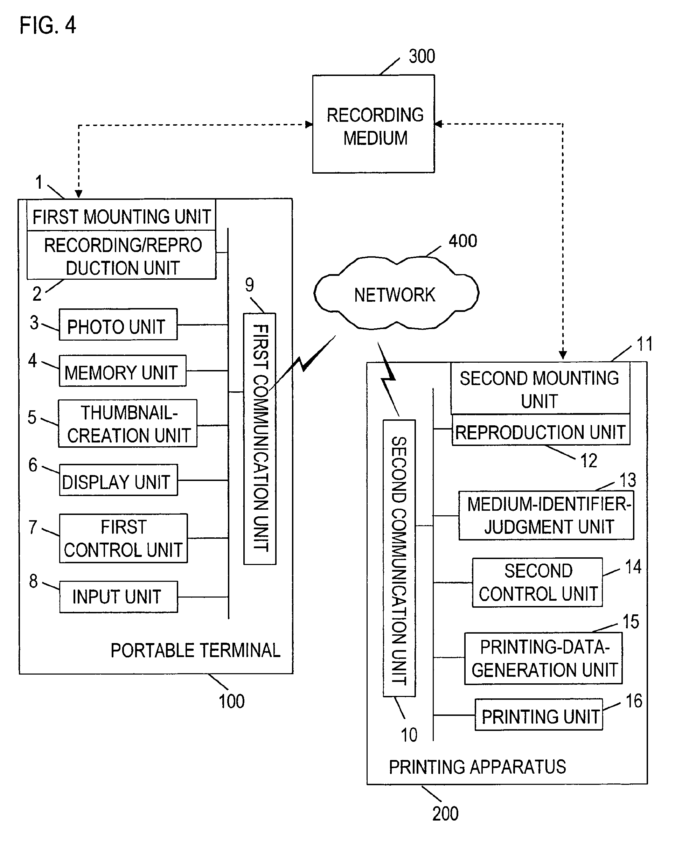

Also, as shown in Fig. 4, the portable terminal 100 and printing apparatus 200 can be connected over a network 400.

Moreover, the printing unit 16 in the embodiment described above can perform the printing process by any method from among various methods such as the thermal transfer method (sublimation type and thermofusion type), sensible heat method, ink jet method, electrophotograph method, or the like, and this printing method is not particularly limited.

Furthermore, in the embodiment described above, the recording medium 300 can be mounted in both the first mounting unit 1 in the portable terminal 100 and the second mounting unit 11 in the printing apparatus 200, and the image data recorded on the recording medium mounted in the first mounting unit 1 in the portable terminal 100 is uploaded to the printing apparatus 200 by mounting that recording medium 300 in the second mounting unit 11 in the printing apparatus 200. However, it is possible for the recording medium 300 to not be mountable in either the portable terminal 100 or printing apparatus 200 or just one of the two. In that case, by connecting the recording medium 300 directly or indirectly to both the portable terminal 100 and printing apparatus 200 by a communication line, or by connecting the recording medium 300 to either the portable terminal 100 or the printing apparatus 200, and mounting it in the other, the image data recorded on the recording medium 300 can be uploaded to the printing apparatus 200.

Also, the reproduction unit 12 of the printing apparatus 200 in the embodiment described above can be replaced with a recording/reproduction unit that has a data recording function. That recording function is used when using the recording medium 300 as a temporary-storage unit (buffer) for storing data when the printing-data-generation unit 15 in the printing apparatus 200 creates printing data for an image based on the image data stored in the recording medium 300 that is mounted in the second mounting unit 2.

Moreover, in the embodiment described above, when selecting an image to be printed, the user enters a printing instruction to the input unit 8, however, it is also possible to include parameter information in the printing instruction related to printing such as the number of prints, paper size and the like, and to print the image to be printed according to that parameter information. This differs from text data in that the image data itself does not contain parameters related to printing, so by sending parameter information in addition to the printing instruction, it is possible to perform printing as the user desires.

Furthermore, in the embodiment described above, printing an image photographed using the photo unit 3 of a portable terminal 100 was explained. However, it is possible for the first communication unit 9 in the portable terminal 100 to have a function for receiving image data from the outside, such as a function for receiving a BS digital broadcast, or a function for receiving data from the Internet. In this case, the image data received by the first communication unit 9 can be processed as the image data to be printed in the same way as described above. In that case, the image data photographed by the photo unit 3 explained in the first embodiment above is replaced with the image data received by the first communication unit 9.

### (Embodiment 2)

Next the image-printing system of a second embodiment of the invention will be explained.

In this second embodiment, the case in which, before the image data stored in the first recording medium 300a is printed, all of the thumbnail images corresponding to the image data stored in the second recording medium 300b are created, and the user selects image data to be printed from among a plurality of image data stored on the first recording medium 300a or second recording medium 300b, is explained.

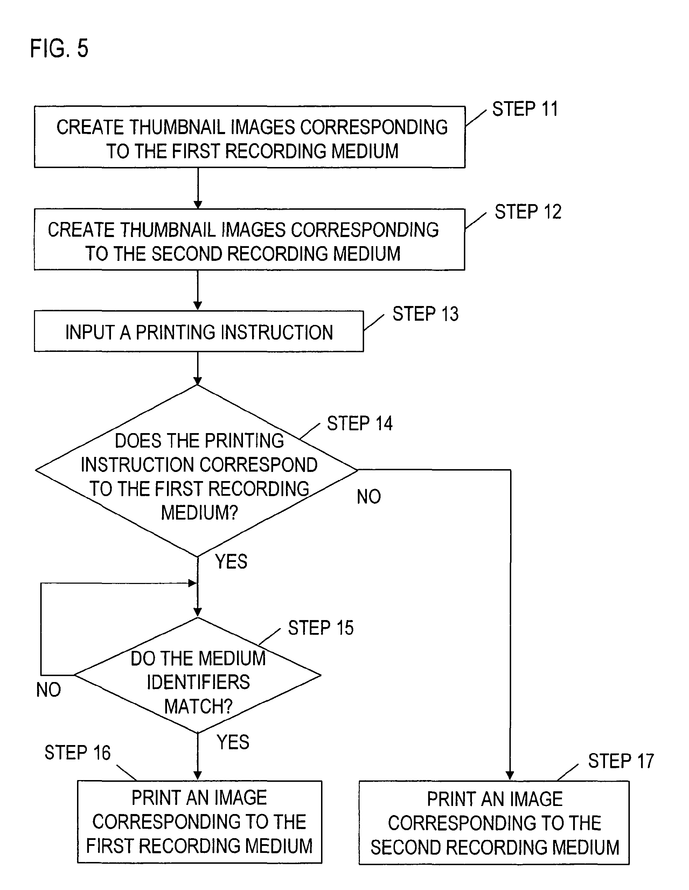

The construction of the image-printing system of this second embodiment is the same as the image-printing system of the first embodiment, so any redundant explanation of parts that were explained in the first embodiment is omitted, and the operation of image-printing system of this second embodiment will be explained using Fig. 1 and Fig. 5, which is a drawing explaining the operating procedure.

First, the user mounts the first recording medium 300a into the first mounting unit 1 in the portable terminal 100, and in order to create thumbnail images that correspond to all of the image data stored on that first recording medium 300a, selects 'Create Thumbnails' from the menu displayed on the display unit 6 and enters a thumbnail-creation instruction into the input unit 8. By doing this, the thumbnail-creation unit 5 creates thumbnail images that correspond to all of the image data stored on the first recording medium 300a (Fig. 5, step 11). Also, the first control unit 7 pairs up all of the created thumbnail images with respective image identifiers, and together with the medium identifier assigned to the first recording medium 300a, stores them in a first folder (for example a folder having the medium identifier as the folder name) and saves them in the memory unit 4. Moreover, after the thumbnail images have been created, the first control unit 7 displays information on the display unit 6 indicating that creation of the thumbnails has finished. After doing so, the user can remove the first recording medium 300a from the first mounting unit 1 in the portable terminal 100 and mount it in the second mounting unit 11 in the printing apparatus 200.

Next, the user mounts a second recording medium 300b in the first mounting unit 1 of the portable terminal 100, and in the same way as was described above, creates thumbnail images that correspond to all of the image data stored on that second recording medium 300b (Fig. 5, step 12). The first control unit 7 pairs up all of the created thumbnail images with corresponding image identifiers, and together with the medium identifier assigned to the second recording medium 300b, puts them in a second folder, and stores them in the memory unit 4.

After thumbnail images corresponding to all of the image data stored on the first recording medium 300a and second recording medium 300b have been stored in the memory unit 4 in this way, the user selects 'Display Thumbnails' from the menu displayed on the display unit 6 and enters a thumbnail-display instruction to the input unit 8. After doing this, the first control unit 7 reads the name of the folder from the memory unit 4 where the thumbnail images are stored, and displays it on the display unit 6. A first folder name (for example, the medium identifier assigned to the first recording medium 300a) and a second folder name (for example, the medium identifier assigned to the second recording medium 300b) are stored in the memory unit 4 as the names of the folders where the thumbnail images are stored, so those two folder names are displayed on the display unit 6.

Here, when it is desired to print an image from among the plurality of image data stored on the first recording medium 300a, the user selects the name for the first folder from the two folder names displayed on the display unit 6, and enters an instruction for such in the input unit 8. After doing this, the first control unit 7 reads one thumbnail image stored in the first folder together with the image identifier that corresponds with that thumbnail image and pairs up the thumbnail image with that image identifier and displays them on the display unit 6. Also, as was explained for the first embodiment, by sequentially pressing the sequential-thumbnail-display button located on the casing of the portable unit 100, the user sequentially displays all of the thumbnail images that correspond to the image data stored on the first recording medium 300a on the display unit 6. The user views all of the displayed thumbnail images and selects the thumbnail image of the image to be printed from among the thumbnail images that correspond to the plurality of image data stored on the first recording medium 300a and enters a printing instruction for that image into the input unit 8 (Fig. 5, step 13).

According to that printing instruction, the first control unit 7 reads the medium identifier of the first recording medium 300a from the memory unit 4, and wirelessly sends that medium identifier, the image identifier of the image to be printed and the printing instruction to the printing apparatus 200 by way of the first communication unit 9.

On the other hand, when it is desired to print an image from among the plurality of images corresponding to the data stored on the second recording medium 300b, the user selects the name of the second folder from the two folder names displayed on the display unit 6. Also, in the same way as described above, the user selects the image to be printed from among the plurality of images corresponding to the data stored on the second recording medium 300b, and enters a printing instruction for that image to the input unit 8.

According to that printing instruction, the first control unit 7 reproduces the image data stored on the second recording medium 300b that is to be printed by way of the recording/reproduction unit 2 and wirelessly sends that image data and the printing instruction to the printing apparatus 200 by way of the first communication unit 9.

In the printing apparatus 200 the second communication unit 10 receives the data from the first communication unit 9 of the portable terminal 100. Moreover, based on the contents of the data received by the second communication unit 10, the second control unit 14 checks whether that received data is an instruction to print an image according to data stored on the first recording medium 300a, or an instruction to print an image according to data stored on the second recording medium 300b (Fig. 5, step 14).

When the data received by the second communication unit 10 is a printing instruction for printing an image according to data stored on the first recording medium 300a, the second control unit 14 reads the medium identifier for the recording medium 300 mounted in the second mounting unit 11 by way of the reproduction unit 12. Also, the medium-identifier-judgment unit 13 determines whether or not the medium identifier received by the second communication unit 10 matches the medium identifier of the recording medium 300 mounted in the second mounting unit 11 (Fig. 5, step 15).

When it is determined in the judgment described above that the identifiers match, information indicating that fact is sent to the second control unit 14, printing-data-generation unit 15 and printing unit 16, and the second control unit 14 by way of the reproduction unit 12 reproduces image data from among the imaged data stored on the first recording medium 300a mounted in the second mounting unit 11 that corresponds to the image identifier received from the second communication unit 10. Also, the printing-data-generation unit 15 creates printing data for that image based on the reproduced image data and the printing unit 16 prints that image based on that printing data (Fig. 5, step 16). The image to be printed, which was selected by the user using the portable terminal 100 from among the images corresponding to the data stored on the first recording medium 300a, is printed in this way.

In the case where the first recording medium 300a is not mounted in the second mounting unit 11, the medium-identifier-judgment unit 13 determines that the identifiers do not match, and at that time, as was explained for the first embodiment, the second control unit 14 wirelessly sends information indicating that fact to the portable terminal 100 by way of the second communication unit 10, and displays that information on the display unit 6. Also, after seeing that displayed information, the user mounts a different recording medium 300, on which it is thought that the image to be printed is stored, in the second mounting unit 11, and the process returns to the step (Fig. 5, step 15) in which the medium-identifier-judgment unit 13 determines whether or not the medium identifier received by the second communication unit 10 matches the medium identifier of the recording medium 300 mounted in the second mounting unit 11.

When it is determined that the data received by the second communication unit 10 is a printing instruction to print image data stored on the second recording medium 300b, the second control unit 14, by way of the printing-data-generation unit 15, creates printing data for that image based on the received image data, and by way of the printing unit 16, prints that image based on that printing data (Fig. 5, step 17). The image to be printed, which was selected by the user using the portable terminal 100 from among the images corresponding to the image data stored on the second recording medium 300b, is printed in this way.

As was explained above, the image-printing system of this second embodiment, is capable of creating thumbnail images corresponding to all of the image data stored on the recording media 300 when there are two recording media 300, even before printing the images based on the data stored in either of the recording media 300. Therefore, after selecting an image to be printed from among the images stored on the two recording media 300, the user can print the selected image.

Also, in the image-printing system of this second embodiment, it is possible to create all of the thumbnail images corresponding to the data respectively stored on each of the two recording media 300 before printing the image data stored on either one of the two recording media 300. Therefore, as in the case of the first embodiment, the user can select an image to be printed from among all of the images corresponding to the data stored on the second recording medium 300b using the portable terminal 100 even while the printing apparatus 200 is printing image data stored on the first recording medium 300a.

In the embodiment described above, the image data to be printed stored on the second recording medium 300b is sent to the printing apparatus 200 from the portable terminal 100. However, it is also possible for the user to upload the image data to be printed that is stored on the second recording medium 300b by removing the first recording medium 300a mounted in the second mounting unit 11 of the printing apparatus 200, and mounting the second recording medium 300b in the second mounting unit 11. In this case, it is possible for the user to print the image to be printed without having to wait a long time, even when there is a large amount of image data to be printed which would take a long time to transfer by communication. However, in order to properly print the image selected by the user from among the data stored on the second recording medium 300b, the first control unit 7, by way of the first communication unit 9, sends the medium identifier of the second recording medium 300b, the image identifier of the image to be printed and the printing instruction to the printing apparatus 200. Also, it is necessary that the image be printed only when the sent medium identifier matches the medium identifier of the recording medium 300 mounted in the second mounting unit 11.

Also, in the embodiment described above, a first recording medium 300a and a second recording medium 300b were used as the recording media, however, it is also possible to use three or more recording media. In the case of three or more recording media, the user can create all of the thumbnail images corresponding to the image data respectively stored on all of or part of the three or more recording media 300 before printing the image data stored on at least one of the three or more recording media 300. Therefore, the user can select an image to be printed from among all of the images corresponding to data respectively stored on the remaining recording media 300 by using the portable terminal, even while the printing apparatus 200 is printing an image corresponding to data stored on one of the three or more recording media 300.

### (Embodiment 3)

Next, the image-printing system of a third embodiment will be explained.

In the first and second embodiment described above, the case where one user uses the portable terminal 100 to have the printing apparatus 200 print image data stored on the first recording medium 300a and/or second recording medium 300b was explained.

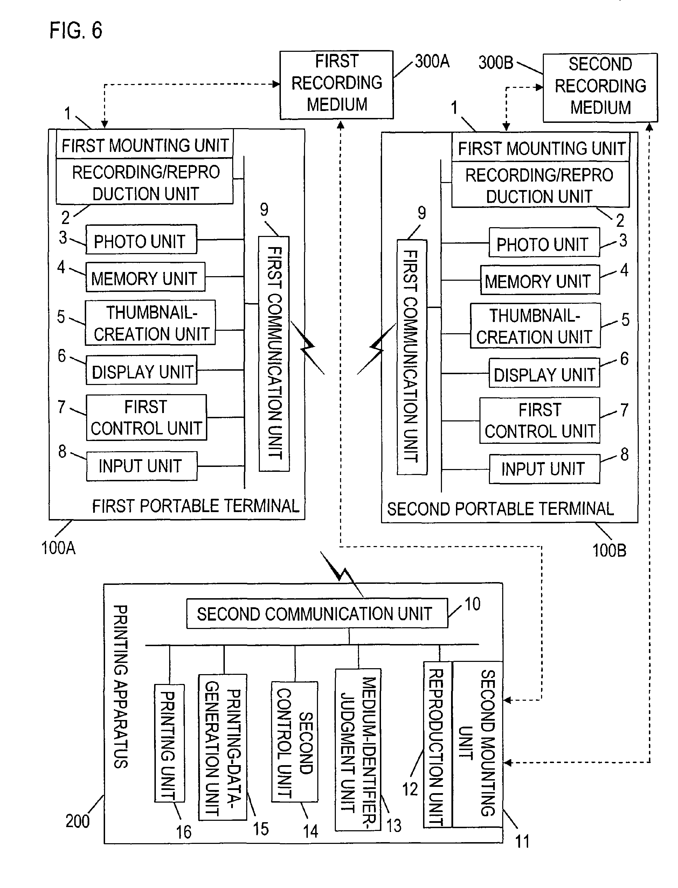

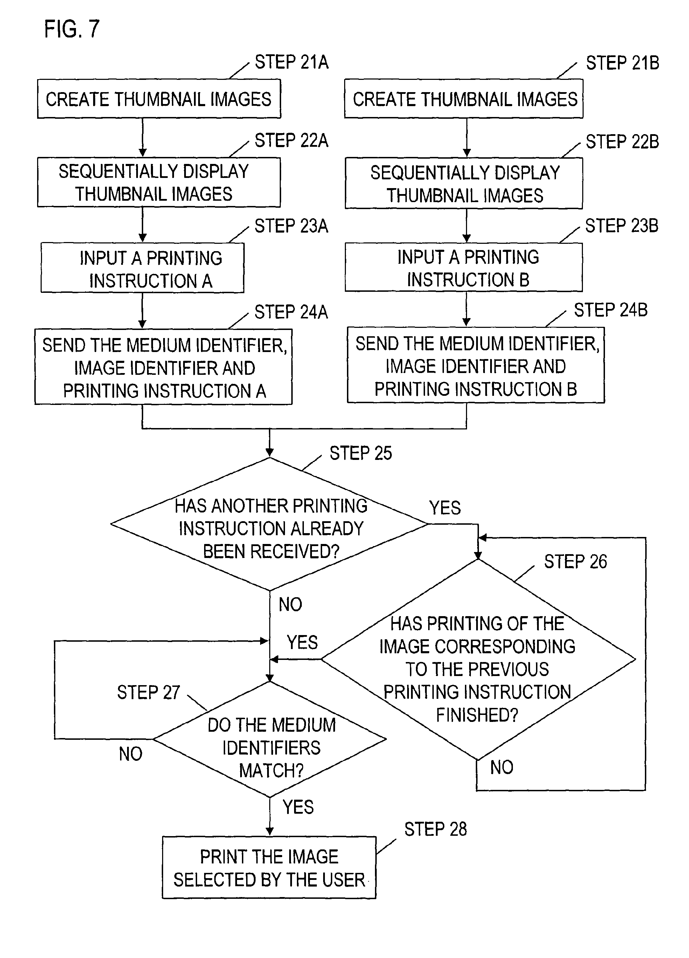

However, in this third embodiment, the case were two users, a first user and a second user, each use separate portable terminals 100 to have the printing apparatus 200 print image data stored on different recording media 300 is explained. Fig. 6 shows the construction of the image-printing system of this third embodiment, and Fig. 7 shows the operating procedure for that image-printing system.

To simplify the explanation, below it will be presumed that the first user performs a printing instruction before the second user, and the printing instruction performed by the first user will be printing instruction A and the printing instruction performed by the second user will be printing instruction B.

Also, it is presumed that the first user uses a first portable terminal 100a and that a first recording medium 300a, which already stores a plurality of image data, is mounted in that first portable terminal 100a, and that the second user uses a second portable terminal 100b and that a second recording medium 300b, which already stores a plurality of image data, is mounted in that second portable terminal 100b. Moreover, the first portable terminal 100a and the second portable terminal 100b are the same as the portable terminal 100 explained for the first embodiment. Furthermore, in this third embodiment, a detailed explanation of parts that are the same as parts explained in the first and second embodiments will be omitted.

First, the first user mounts the first recording medium 300a in the first mounting unit 1 in the first portable terminal 100a, and using the first portable terminal 100a, creates thumbnail images that correspond to all of the image data stored on the first recording medium 300a (Fig. 7, step 21a). Also, the first user pairs up each of the created thumbnail images with corresponding image identifiers, and stores them together with the medium identifier assigned to the first recording medium 300a in a first folder (for example a folder whose folder name is the medium identifier) and saves that folder in the memory unit 4 of the first portable terminal 100a.

Next, by sequentially displaying all of the created thumbnail images on the display unit 6 of the first portable terminal 100a (Fig. 7, step 22a), and selecting a few of the displayed thumbnail images, the first user selects an image to be printed from among the plurality of images corresponding to the data stored on the first recording medium 300a and enters a printing instruction A for printing that image into the input unit 8 (Fig. 7, step 23a).

After doing this, the first control unit 7 of the first portable terminal 100a, by way of the first communication unit 9, wirelessly sends the medium identifier of the first recording medium 300a, the image identifier of the image to be printed, and the printing instruction A to the printing apparatus 200 (Fig. 7, step 24a).

In the printing apparatus 200, the second communication unit 10 receives the medium identifier, the image identifier and printing instruction A from the first portable terminal 100a and after that printing instruction A has been received, the second control unit 14 checks whether or not a printing instruction has already been received by a second communication unit 10 from a portable terminal 100 other than the first portable terminal 100a (Fig. 7, step 25).

In the case that the printing instruction A is received by the second communication unit 10 and another printing instruction has already been received by the second communication unit 10 from a portable terminal 100 other than the first portable terminal 100a, the second control unit 14 checks whether or not printing of the image corresponding to the printing instruction received before the printing instruction A from the first portable terminal 100a has finished (Fig. 7, step 26). The second control unit 14 performs the next control depending on the results of that check.

However, in the above case, when the printing instruction A was received by the second communication unit 10, no other printing instruction was received beforehand from a portable terminal 100 other than the first portable terminal 100a. Therefore, the second control unit 14 sends information to the first portable terminal 100a by way of the second communication terminal 10 indicating that it is possible to mount a recording medium 300 in the second mounting unit 11 in the printing apparatus 200, and displays that information on the display unit 6 of the first portable terminal 100a. The first user then removes the first recording medium 300a from the first mounting unit 1 in the first portable terminal 100a and mounts it in the second mounting unit 11 in the printing apparatus 200.

After a recording medium 300 has been mounted in the second mounting unit 11 in the printing apparatus 200 in this way, the medium-identifier-judgment unit 13 determines whether or not the medium identifier received by the second communication unit 10 matches the medium identifier of the recording medium 300 mounted in the second mounting unit 11 (Fig. 7, step 27).

When it is determined that the identifiers match, the printing-data-generation unit 15 creates printing data for the image based on the image data from among the data stored on the first recording medium 300a mounted in the second mounting unit 11 that corresponds to the image identifier received by the second communication unit 10. Also, the printing unit prints that image, or in other words the image selected by the user, based on that printing image data (Fig. 7, step 28).

However, when the medium-identifier-judgment unit 13 determines that the identifiers do not match (no match), information indicating that fact is wirelessly sent to the first portable terminal 100a by way of the second communication unit 10, and is displayed on the display unit 6 of that first portable terminal 100a. In that case, the first user mounts another recording medium 300 on which it is thought that the image data to be printed is stored in the second mounting unit 11. After a new recording medium 300 has been mounted in the second mounting unit 11 in this way, the process returns to the step (Fig. 7, step 27) in which the medium-identifier-judgment unit 13 determines whether or not the medium identifier received by the second communication unit 10 matches the medium identifier of the recording medium 300 mounted in the second mounting unit 11.

After the first user enters a printing instruction A into the input unit 8 of the first portable terminal 100a, it is possible that the second user will also want to use the printing apparatus 200 to print images corresponding to data stored on a second recording medium 300b.

In that case, similar to the first user, the second user mounts the second recording medium 300b in the first mounting unit 1 in the second portable terminal 100b, and uses the second portable to create thumbnail images for all of the images corresponding to the data stored on the second recording medium 300b (Fig. 7, step 21b). Also, the second user pairs up all of the created thumbnail images with corresponding image identifiers, and together with the medium identifier assigned to the second recording medium 300b, stores them in a second folder and saves them in the memory unit 4 of the second portable terminal 100b.

Next, by sequentially displaying all of the created thumbnail images on the display unit 6 (Fig. 7, step 22b) and selecting a displayed thumbnail image, the user selects an image to be printed from the plurality of image data stored on the second recording medium 300b, and enters a printing instruction B to print that image into the input unit 8 (Fig. 7, step 23b). After that, the first control unit 7 of the second portable terminal 100b wirelessly sends the medium identifier of the second recording medium 300b, the image identifier of the image to be printed, and the printing instruction B to the printing apparatus 200 by way of the first communication unit 9 (Fig. 7, step 24b).

In the printing apparatus 200, the second communication unit 10 receives the medium identifier, the image identifier and the printing instruction B from the second portable terminal 100b, and then the second control unit 14 checks whether or not a printing instruction has already been received by the second communication unit 10 from a portable terminal 100 other than the second portable terminal 100b (Fig. 7, step 25).

As was described above, when the second communication unit 10 received the printing instruction B, the printing instruction A had already been received from the first portable terminal 100a. Therefore, before executing the printing instruction B, the second control unit 14 checks whether or not printing of the image data corresponding to the printing instruction A that was received by the second communication unit 10 has finished (Fig. 7, step 26).

When it is determined from that check that printing of the image corresponding to the printing instruction A has not yet finished, the second control unit 14 sends information indicating that printing of image data corresponding to a printing instruction other than printing instruction B has not yet finished to the second portable terminal 100b, and displays it on the display unit 6 of the second portable terminal 100b. The user then knows that a printing instruction from another person was performed before the printing instruction B performed by himself/herself, and that the printing apparatus 200 is currently printing the image corresponding to the other person's printing instruction, so the second user waits to mount the second recording medium 300b in the second mounting unit 11 in the printing apparatus 200.

When it was learned from the check described above (Fig. 7, step 26) that printing of the image corresponding to printing instruction A has finished, or when it is learned that during the check printing of the image corresponding to printing instruction A was not yet finished but that printing finished after that, the second control unit 14 sends information indicating that it is possible to mount a recording medium 300 in the second mounting unit 11 in the printing apparatus 200 to the second portable terminal 100b by way of the second communication unit 10. That information is displayed on the display unit 6 of the second portable terminal 100b, and after that the second user mounts the second recording medium 300b into the second mounting unit 11 in the printing apparatus 200.

After the second recording medium 300b is mounted in the second mounting unit 11 in this way, the process moves to the step (Fig. 7, step 27) in which the medium-identifier-judgment unit 13 determines whether or not the medium identifier from the second portable terminal 100b matches the medium identifier of the recording medium 300 mounted in the second mounting unit 11. When the medium-identifier-judgment unit 13 determines that the identifiers match, the printing-data-generation unit 15 creates printing data for the image corresponding to the printing instruction B from the second portable terminal 100b, and the printing unit 16 prints that image (Fig. 7, step 28).

As was explained above, by using the image-printing system of this third embodiment, when two users each use separate portable terminals to print image data stored on separate recording media 300, while one user sends a printing instruction and uses the printing apparatus 200 to print an image corresponding to that printing instruction, it is possible for the other user to create thumbnail images using the portable terminal 100 and to send a printing instruction without interrupting the on-going printing process.

In the third embodiment described above, the data communication method between the first portable terminal 100a and printing apparatus 200, and the data communication method between the second portable terminal 100b and printing apparatus 200 is not limited and can be the same as any of the methods described in the first embodiment, or can be a communication method via a network.

Also, in the third embodiment described above, to simplify the explanation, the case where two users each use separate portable terminals 100 to print images based on data stored on separate recording media 300 was explained. However, it is also possible for one user to use two portable terminals 100 to print images based on data stored on separate recording media 300. In that case, either printing instruction A or printing instruction B is performed first, and the other is performed later, however the on-going printing process is not interrupted while the printing apparatus 200 is printing the image corresponding to the printing instruction that was performed first.

Also, in the third embodiment described above, the image data stored on a recording medium 300 was uploaded to the printing apparatus 200 by mounting that recording medium 300 into the second mounting unit in the printing apparatus 200. However, it is also possible to upload the image data stored on the recording medium 300 to the printing apparatus 200 by sending it from the first portable terminal 100a or portable terminal 100b to the printing apparatus 200.

Also, in the third embodiment described above, the case where two users each use a separate portable terminal 100 to print images based on data stored on separate recording media 300 was explained. However, it is possible for there to be three or more users and for each of them to use a separate portable terminal 100 to print images based on data stored on separate recording media 300. That is, the number of portable terminals 100 and recording media 300 can be three or more. In that case, it is possible to use the other portable terminals 100 to create thumbnail images corresponding to data stored on other recording media 300 that are separate from the recording medium 300 on which the image data currently being printed is stored, even while printing is being performed based on a printing instruction from a portable terminal 100. Also, when printing instructions are sent to the printing apparatus 200 from each of the portable terminals 100, it is possible to print the images corresponding to each printing instruction in the order that the printing instructions were sent.

### (Embodiment 4)

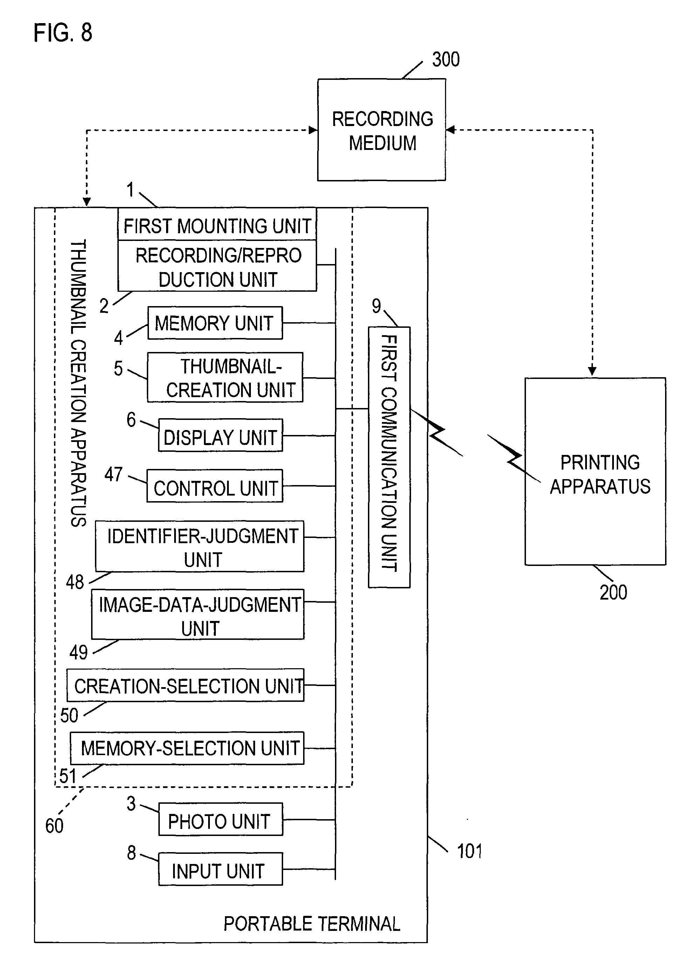

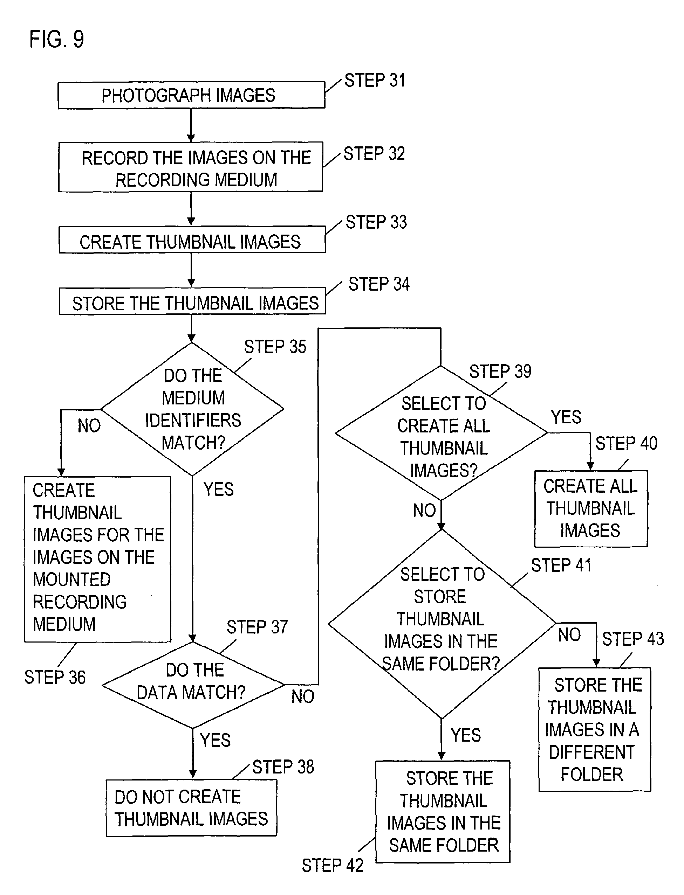

Next, the construction and operation of the thumbnail-creation apparatus 60 of a fourth embodiment of the invention will be explained. Fig. 8 shows the construction of the thumbnail-creation apparatus 60 of this fourth embodiment, and Fig. 9 shows the operating procedure of that thumbnail-creation apparatus 60.

As shown in Fig. 8, the thumbnail-creation apparatus 60 of this fourth embodiment is an apparatus located inside the portable terminal 101, and it is an apparatus that creates thumbnail images based on a plurality of images photographed by the photo unit 3, or a plurality of image data stored on a recording medium 300 mounted in the first mounting unit 1.

When the user wants to photograph an image using a portable terminal 101 having a thumbnail-creation apparatus 60, as was explained for the first embodiment, the user mounts the recording medium 300 in the first mounting unit 1, and aims the lens of the photo unit 3 at the object to be photographed and presses the photo button located on the casing of the portable terminal 101. By doing so, a photo instruction is input to the input unit 8 and the photo unit 3 photographs the image based on that photo instruction, and assigns an identifier (image identifier) to the image data for identifying that image data (Fig. 9, step 31). Also, the control unit 47 pairs up the photographed image data with the corresponding image identifier and stores it in the memory unit 4, and the recording/reproduction unit 2 similarly pairs up that image data with the corresponding image identifier and records it on a first recording medium 300a (Fig. 9, step 32).

In this way, a plurality of image data photographed by the photo unit 3 is paired up with corresponding image identifiers, and stored in the memory unit 4 and recorded on the first recording medium 300a.

Next, the control unit 47, by way of the recording/reproduction unit 2, sequentially reproduces the pair of image data stored on the recording medium mounted in the first mounting unit 1 and corresponding image identifier. Moreover, the thumbnail-creation unit 5 uses the reproduced data to sequentially create thumbnail images corresponding to all of the image data stored on the recording medium 300 (Fig. 9, step 33). After that, the control unit 47 pairs up each of the created thumbnail images with the corresponding image identifiers and stores them in the memory unit 4 (Fig. 9, step 34). When doing this, the control unit 47 also, by way of the recording/reproduction unit 2, reads from recording medium 300 the medium identifier that is assigned to the recording medium 300 mounted in the first mounting unit 1. Then, the control unit 47 stores that medium identifier together with the created thumbnail image and information for identifying when that thumbnail image was created in a special folder (for example, a folder whose folder name is that medium identifier and the information for identifying the time of creation).

Here an example of when the user wishes to photograph an image and record that image data on the recording medium 300 several hours or several days later, or wishes to uses a portable terminal having the same photo functions as the portable terminal 101 to create thumbnail images corresponding to a plurality of image data for the purpose of performing a printing instruction, will be examined.

In this case, the user mounts the recording medium 300 in the first mounting unit 1. After doing so, when the control unit 47, by way of the recording/reproduction unit 2, reproduces the medium identifier of the recording medium 300, it reads all of the medium identifiers stored in the memory unit 4. The identifier-judgment unit 48 then determines whether or not the medium identifier of the recording medium 300 matches any of the medium identifiers stored in the memory unit 4 (Fig. 9, step 35).

When it is determined that there is no match, the control unit 47, by way of the recording/reproduction unit 2, sequentially reproduces the plurality of pairs of image data and corresponding image identifiers recorded on the recording medium 300. Moreover, the thumbnail-creation unit 5 sequentially creates thumbnail images corresponding to all of the image data stored on the recording medium 300 (Fig. 9, step 36). Furthermore, the control unit 47, by way of the recording/reproduction unit 2, reads the medium identifier assigned to the recording medium 300 mounted in the first mounting unit 1, and pairs up all of the created thumbnail images with corresponding imaged identifiers, and together with that medium identifier and information identifying when the thumbnail images where created, stores them in a special folder that is different than the folder mentioned above (for example a folder whose folder name is the that medium identifier and the information identifying the time of creation) and saves it in the memory unit 4. By doing this, it is possible to divide up and store thumbnail images for each recording medium 300, and when selecting images to be printed, the user can view the thumbnail images for each recording medium 300, and select images to be printed for each recording medium 300.

On the other hand, when the identifier-judgment unit 48 determines that the identifiers match (Fig. 9, step 35), the control unit 47, by way of the recording/reproduction unit 2, reads the data stored on the recording medium 300, and reads from the memory unit 4 the data stored in the folder in which the medium identifier that was determined to match is stored. Also, the image-data-judgment unit 49 determines whether or not the data read from the recording medium 300 matches the data read from the memory unit 4 (Fig. 9, step 37).

When the image-data-judgment unit 49 determines that the data matches (Fig. 9, step 37), since the thumbnail images corresponding to the image data stored on the recording medium 300 are already stored in the memory unit 4, the control unit 47 controls the thumbnail-creation unit 5 such that it does not create thumbnail images that correspond to the image data stored on the recording medium 300 (Fig. 9, step 38).

However, when the image-data-judgment unit 49 determines that the data does not match (Fig. 9, step 37), then some of the thumbnail images that correspond to the image data stored on the recording medium 300 have not yet been stored in the memory unit 4. Therefore, the creation-selection unit 50 displays either:
(1) 'Create new thumbnail images for all of the image data stored on the recording medium 300?' or
(2) 'Create thumbnail images for the image data stored on the recording medium 300 except for the image data for which thumbnail images are already stored in the memory unit 4?'
on the display unit 6 to prompt the user to select either (1) or (2) above (Fig. 9, step 39).

In other words, the creation-selection unit 50 prompts the user to select whether to create thumbnail images that correspond to all of the image data stored on the mounted recording medium 300 and not just the thumbnail images that are not yet stored in the memory unit 4 (corresponding to item (1) above), or to create just thumbnail images that are not yet stored in the memory unit 4 (corresponding to item (2) above).

When the user enters an instruction into the input unit 8 to select item (1) above, the thumbnail-creation unit 5 sequentially creates thumbnail images that correspond to all of the image data stored on the recording medium 300 (Fig. 9, step 40). Also, the control unit 47, by way of the recording/reproduction unit 2, reads the medium identifier assigned to the recording medium 300 from the recording medium 300. Next, it pairs up all of the created thumbnail images with corresponding image identifiers, and together with the medium identifier and information indicating the time of creation of the thumbnail images, stores them in another folder (for example, a folder whose folder name is that medium identifier and information indicating the time of creation) and saves the folder in the memory unit 4.

On the other hand, when the user enters an instruction into the input unit 8 to select item (2) above (Fig. 9, step 39), it is necessary to designate the folder that stores the thumbnail images from among the thumbnail images corresponding to all the image data stored on the recording medium 300, that have not yet been stored in the memory unit 4. In this case, the memory-selection unit 51 displays:
(a) 'Store the newly created thumbnail images in the folder where the medium identifier for recording medium 300 is stored?' or
(b) 'Store the newly created thumbnail images in a different folder than where the medium identifier for recording medium 300 is stored?'
on the display unit 6, to prompt the user to select either (a) or (b) above (Fig. 9, step 41).

In other words, the memory-selection unit 51 prompts the user to select whether to store the thumbnail images from among the thumbnail images corresponding to all of the image data stored on the recording medium 300 that have not yet been stored in the memory unit 4 in the same folder where the other thumbnail images for the images are already stored, or in a different folder.

When the user enters an instruction into the input unit 8 to select item (a) above, the thumbnail-creation unit 5 sequentially creates thumbnail images for the image data stored on the recording medium 300 except for the image data for which thumbnail images are already stored in the memory unit 4 according to item (2) above (Fig. 9, step 42). Also, the control unit 47, pairs up all of the created thumbnail images with corresponding image identifiers, and together with information indicating the time of creation of thumbnails, stores them in the folder in the memory unit 4 where the other thumbnail images are already stored and saves them in the memory unit 4 (Fig. 9, step 42). In this way, the thumbnail images for the image data stored on the same recording medium 300 are stored in the same folder, and it is possible to manage the thumbnail images for each recording medium 300.

On the other hand, when the user enters an instruction into the input unit 8 to select item (b) above, the thumbnail-creation unit 5 sequentially creates thumbnail images for the image data stored on the recording medium 300 except for the image data for which thumbnail images are already stored in the memory unit 4 according to item (2) above (Fig. 9, step 43). Also, the control unit 47 pairs up all of the created thumbnail images with corresponding image identifiers, and together with the medium identifier of the recording medium 300 where the source image data of the created thumbnail images is stored and information indicated the time of creation of the thumbnail images, stores them is another folder (for example, a folder whose folder name is the that medium identifier and the information indicating the time of creation) and saves the folder in the memory unit 4 (Fig. 9, step 43). By doing so, it is possible to separately manage the thumbnail images when the time the images were photographed differs, even when the thumbnail images are for image data stored on the same recording medium 300, so the user can delete the folder that stores no longer needed thumbnail images together with the stored data, and thus it is possible to effectively use the memory capacity of the memory unit 4.

As described above, by using the thumbnail-creation apparatus 60 of this embodiment, thumbnail images are saved in the memory unit 4, so by reading the thumbnail images saved in that memory unit 4, the user can select an image to print without having to mount the recording medium 300 in the mounting unit 1 in the portable terminal 101.

The procedure by which the user uses the portable terminal 101 to select an image to be printed and the procedure of performing a printing instruction, and the procedure by which the printing apparatus 200 prints the image to be printed were explained in the first and second embodiment, so that explanation is omitted.

Also, in the embodiment described above, the image-data-judgment unit 49 determines whether or not the data read from the recording medium 300 matches the data read from the memory unit 4 (Fig. 9, step 37), however, when doing that, it is possible to perform that judgment using the image identifiers.

Also, as described in this embodiment, when the image-data-judgment unit 49 determines there is no match (Fig. 9, step 37), the user was prompted to select whether to (1) create new thumbnail image for all of the image data stored on the recording medium 300, or (2) create thumbnail images for the image data stored on the recording medium 300 except for the image data for which thumbnail images are already stored in the memory unit 4 (Fig. 9, step 39). However, when the image-data-judgment unit 49 determines there is no match (Fig. 9, step 37), it is also possible to not have the user select between (1) or (2) above, but rather determine beforehand whether to create thumbnail images according to (1) or (2) above.

Similarly, when the user entered an instruction into the input unit 8 to select item (2) (Fig. 9, step 39), the user was then prompted to select whether to (a) store the newly created thumbnail images in the folder where the medium identifier for recording medium 300 is stored, or (b) store the newly created thumbnail images in a different folder than where the medium identifier for recording medium 300 is stored. However, when the user selects item (2) above, it is possible to not have the user select (a) or (b), but rather determine beforehand whether to store the newly created thumbnail images in a specified folder according to (a) or (b) above.

Moreover, in the embodiment described above, when the image-data-judgment unit 49 determines that there is no match (Fig. 9, step 37), it means that some of the thumbnail images corresponding to the image data stored on the recording medium 300 are not yet stored in the memory unit 4, so the thumbnail images that are not stored are then stored in the memory unit 4. However, when the image-data-judgment unit 49 determines that there is no match (Fig. 9, step 37), it is possible to display information indicating that fact on the display unit 6, and to prompt the user to select whether to store or not store the thumbnail images not yet stored in the memory unit 4. In that case, when the user selects not to store the missing thumbnail images, the thumbnail images that are not yet stored in the memory unit 4 are not created, and since thumbnail images that are not needed are not stored in the memory unit 4, it is possible to more effectively use the memory capacity of the memory unit 4.

Also, in the embodiment described above, the case in which first, thumbnail images of the images photographed using the portable terminal 101 are created and then those thumbnail images are stored in the memory unit 4, was explained. However, in the case where a recording medium 300 that stores image data is mounted beforehand, the following procedure can be performed instead. In other words, the procedure of storing the thumbnail images in the memory unit 4 can be replaced with a procedure of creating thumbnail images corresponding to the image data stored on the recording medium 300 and then storing those thumbnail images in the memory unit 4 together with corresponding image identifiers.

Moreover, in the embodiment described above, the case of printing images photographed using the photo unit 3 of the portable terminal 101 was explained. However, in the case in which the first communication unit 9 of the portable terminal 101 has a function of receiving image data for the outside, such as a function for receiving a BS digital broadcast or a function of receiving data from a network, it is possible to use the embodiment described above when creating thumbnail images based on the received image data. In that case, the image data photographed used the photo unit 3 as described above is replaced with the image data received by the first communication unit 9.

Furthermore, in the embodiment described above, the thumbnail-creation apparatus 60 was located in the portable terminal 101, however, in the case of creating thumbnail images by a printing apparatus using conventional technology as explained above, it is possible to locate the thumbnail-creation apparatus 60 in the printing apparatus.

Also, in the operating procedure of the image-printing system of the embodiments explained above using Fig. 2, Fig. 5 and Fig. 7, a printing instruction was sent to the printing apparatus from the portable terminal and then the recording medium mounted in the portable terminal was mounted in the printing apparatus. However, in the case of special uses (for example, when the printing apparatus is a Kiosk terminal), it is preferred that the printing instruction be sent from the portable terminal to the printing apparatus after the recording medium from the portable terminal has been mounted in the printing apparatus. That operating procedure will be briefly explained here.

First, the user mounts the recording medium on which the images are recorded in the portable terminal, and using the portable terminal creates thumbnail images for viewing the image data stored on that recording medium (step S401).

While viewing the thumbnail images that were created in step S401, the user then selects an image to be printed (step S402). In this state, that thumbnail image is stored in the internal memory of the portable terminal. Next the user mounts the recording medium that was mounted in the portable terminal into the printing apparatus (step S403).

Next, the user executes a printing instruction with the recording medium that stores the image data to be printed mounted in the printing apparatus (step S404).

As mentioned above, in the processing order above, it is possible to have the printing apparatus not receive a printing instruction even though a printing instruction may be sent from the portable terminal before inserting the recording medium into the printing apparatus. By doing so, since it is clearly known which user is using the terminal, it is clearly understood from which user the printing instruction is from, so there is no problem of mixing up users in the case of a printing apparatus that is used by a many unspecified users.

Also, with the embodiments described above, unlike in a conventional image-data-processing system where thumbnail images are created and various process are performed by a server or the like, the thumbnail images are created on the side of the portable terminal, so specifications related to the thumbnails can be freely designed using each individual portable terminal. In other words, this is possible by simply setting command specifications such as a printing instruction from the portable terminal to the printing apparatus, and this is easier for the portable terminal than creating the thumbnail images by a server and then sending them to the portable terminal.

Also, all of the components of the portable terminal, printing apparatus and thumbnail-creation apparatus in the embodiments described above can be constructed using hardware, or can be constructed using software.

Furthermore, it is possible to apply a program to a specified computer to have that computer function as all or part of the elements of the portable terminal, printing apparatus and thumbnail-creation apparatus in the embodiments described above, and to realize the function of all or part of the elements of the portable terminal, printing apparatus and thumbnail-creation apparatus in the embodiments described above on that computer. As specific examples of using a program as described above there is recording the program on a recording medium such as a CD-ROM and distributing the recording medium on which that program is recorded, or transferring that program by a communication unit such as the Internet. Also, it is possible to install that program in the computer.

### Industrial Applicability

This invention can provide an image-printing system that is capable of creating thumbnail images at the same time as a printing process even when a printing apparatus, which is not able to perform a plurality of processes at the same time, is printing an image; and a portable terminal and printing apparatus of this image-printing system.

Moreover, this invention can provide a thumbnail-creation apparatus that controls the creation of thumbnail images depending on whether a recording medium, which is the same as the recording medium on which original image data is stored and which is the source of thumbnail images that are created and stored, is mounted or whether a different recording medium is mounted.

With the portable terminal, printing apparatus, image-printing system, and thumbnail-creation apparatus of this invention, thumbnail images can be created during a printing process even when a printing apparatus that is not capable of performing a plurality of processes at the same time is printing an image, which is very useful when the portable terminal performs a printing instruction based on an operation by the user, the printing apparatus prints an image based on a printing instruction from that portable terminal, and the thumbnail-creation apparatus creates thumbnail images.

## Claims

1. A portable terminal that creates thumbnail images corresponding to image data stored on a portable recording medium and displays said thumbnail images such that they can be selected, and comprising:
a memory unit that is accessible even when said portable recording medium is removed;
a control unit operable to pair up said created thumbnail images with image identifiers that identify image data, which is the source of the created thumbnail images, and store them in said memory unit; and
a communication unit operable to send said image identifier that corresponds to a selected thumbnail image together with a printing instruction for printing the image data corresponding to that image identifier.

2. The portable terminal of claim 1 wherein
said control unit further reads a medium identifier from the portable recording medium on which the image data that is the source of said thumbnail images is stored that is capable of clearly identifying that portable recording medium, and relates it to said thumbnail images and image identifiers and stores it in said memory unit; and wherein
said communication unit is operable to send said medium identifier together with said image identifier and said printing instruction.

3. The portable terminal of claim 2 wherein said printing instruction contains printing related parameter information.

4. A printing apparatus having a mounting unit in which a portable recording medium can be mounted or removed, and comprising:
a communication unit operable to receive a medium identifier that is capable of clearly identifying said portable recording medium, an image identifier that identifies image data and a printing instruction for printing the image data;
a medium-identifier-judgment unit operable to determine whether or not the medium identifier of the portable recording medium mounted in said mounting unit matches the medium identifier received by said communication unit; and
a control unit operable to print image data from the mounted portable recording medium that corresponds to a received image identifier according to said printing instruction when said medium identifiers match.

5. The printing apparatus of claim 4 wherein
said communication unit is operable to accept said printing instruction only when a portable recording medium is mounted in said mounting unit.

6. The printing apparatus of claim 4 wherein said communication unit is operable to accept said printing instruction even when a portable recording medium is not mounted in said mounting unit.

7. The printing apparatus of claim 4 wherein said communication unit is operable to switch between a configuration to accept said printing instruction only when a portable recording medium is mounted in said mounting unit, and a configuration to accept said printing instruction even when there is no portable recording medium mounted in said mounting unit, according to specified conditions.

8. An image-printing system comprising a portable terminal that creates thumbnail images corresponding to image data stored on a portable recording medium and displays said thumbnail images such that they can be selected, and a printing apparatus having a mounting unit in which a portable recording medium can be mounted or removed, and wherein
said portable terminal comprises:
a memory unit that is accessible even when said portable recording medium is removed;
a control unit operable to pair up said created thumbnail images with image identifiers that identify image data, which is the source of the created thumbnail images, and store them in said memory unit; and
a communication unit operable to send said image identifier that corresponds to a selected thumbnail image together with a printing instruction for printing the image data corresponding to that image identifier; and wherein
said printing apparatus comprises:
a communication unit operable to receive said medium identifier, said image identifier and said printing instruction;
a medium-identifier-judgment unit operable to determine whether or not the medium identifier of the portable recording medium mounted in said mounting unit matches the medium identifier received by said communication unit; and
a control unit operable to print image data from the mounted portable recording medium that corresponds to a received image identifier according to a printing instruction from said portable terminal when said medium identifiers match.

9. A printing-instruction method comprising:
a thumbnail-creation step of creating thumbnail images;
a control step that pairs up said created thumbnail images with image identifiers that identify image data, which is the source of the thumbnail images, and stores them in a memory unit that is accessible even when said portable recording medium that stores said image data is removed;
a display step of displaying said stored thumbnail images such that they can be selected; and
a transmission step of sending said image identifier that corresponds to a selected thumbnail image and a printing instruction for printing the image data corresponding to said image identifier.

10. A printing method comprising:
a receiving step of receiving a medium identifier that is capable of clearly identifying a portable recording medium, an image identifier that identifies image data and a printing instruction for printing image data;
a medium-identifier-judgment step of determining whether or not the medium identifier of a portable recording medium mounted in a specified mounting unit matches said received medium identifier; and
a printing step of printing image data from said mounted portable recording medium that corresponds to said received image identifier according to said printing instruction when said medium identifiers match.

11. An image-printing method wherein a printing apparatus prints an image based on a printing instruction from a portable terminal and comprising:
a thumbnail-creation step of creating thumbnail images;
a control step that pairs up said created thumbnail images with image identifiers that identify image data, which is the source of the thumbnail images, and stores them in a memory unit that is accessible even when said portable recording medium that stores said image data is removed;
a display step of displaying said stored thumbnail images such that they can be selected;
a transmission step of sending said image identifier that corresponds to a selected thumbnail image and a printing instruction for printing the image data corresponding to the image identifier;
a receiving step of receiving said medium, said image identifier and said printing instruction;
a medium-identifier-judgment step of determining whether or not the medium identifier of a portable recording medium mounted in a specified mounting unit matches said received medium identifier; and
a printing step of printing image data from said mounted portable recording medium that corresponds to said received image identifier according to said printing instruction when said medium identifiers match.

12. A program that is executed on a computer comprising:
a thumbnail-creation step of creating thumbnail images;
a control step that pairs up said created thumbnail images with image identifiers that identify image data, which is the source of the thumbnail images, and stores them in a memory unit that is accessible even when said portable recording medium that stores said image data is removed;
a display step of displaying said stored thumbnail images such that they can be selected; and
a transmission step of sending said image identifier that corresponds to a selected thumbnail image and a printing instruction for printing the image data corresponding to the image identifier.

13. A program that is executed on a computer comprising:
a receiving step of receiving a medium identifier that is capable of clearly identifying a portable recording medium, an image identifier that identifies image data and a printing instruction for printing image data;
a medium-identifier-judgment step of determining whether or not the medium identifier of a portable recording medium mounted in a specified mounting unit matches said received medium identifier; and
a printing step of printing image data from said mounted portable recording medium that corresponds to said received image identifier according to said printing instruction when said medium identifiers match.

14. A thumbnail-creation apparatus comprising:
a mounting unit in which a portable recording medium is mounted;
a thumbnail-creation unit that creates thumbnail images of image data;
a memory unit that pairs up and stores the thumbnail images created by said thumbnail creation unit and the medium identifier of the portable recording medium that stored or stores the image data, which is the source of the thumbnail images;
an identifier-judgment unit that determines whether or not the medium identifier of the portable recording medium mounted in said mounting unit matches a medium identifier that is stored in said memory unit; and
a control unit that controls at least said thumbnail-creation unit based on the judgment results from said identifier-judgment unit.

15. The thumbnail-creation apparatus of claim 14 wherein when said identifier-judgment unit determines there is no match,
said thumbnail-creation unit creates thumbnail images from the image data stored on the portable recording medium mounted in said mounting unit.

16. The thumbnail-creation apparatus of claim 14 further comprising:
an image-data-judgment unit that determines whether or not all of the image data stored on said mounted portable recording medium matches all of the image data that is the source of the thumbnail images stored in said memory unit; and wherein
said thumbnail-creation unit creates thumbnail images of image data based further on the judgment result from said image-data-judgment unit when said identifier-judgment unit determines that the medium identifiers match.

17. The thumbnail-creation apparatus of claim 16 wherein when said image-data-judgment unit determines there is a match,
said thumbnail-creation unit does not create thumbnail images.

18. The thumbnail-creation apparatus of claim 16 wherein when said image-data-judgment unit determines there is no match,
said thumbnail-creation unit
(1) creates new thumbnail images for all of the image data stored on said portable recording medium, or
(2) creates thumbnail images for the image data of the image data stored on said portable recording medium for which no corresponding thumbnail images have been created.

19. The thumbnail-creation apparatus of claim 18 wherein
said thumbnail-creation unit comprises a creation-selection unit that prompts the user to select whether to,
(1) create new thumbnail images for all of the image data stored on said portable recording medium, or
(2) create thumbnail images for the image data of the image data stored on said portable recording medium for which no corresponding thumbnail images have been created.

20. The thumbnail-creation apparatus of claim 18 wherein when said thumbnail-creation unit creates thumbnail images for the image data of the image data stored on said portable recording medium for which no corresponding thumbnail images have been created (2), it
(a) adds the thumbnail images to the same folder where thumbnail images are already stored, or
(b) stores the thumbnail images to a different folder than the folder where thumbnail images are already stored.

21. The thumbnail-creation apparatus of claim 20 that further comprises a memory-selection unit that prompts the user to select whether to,
(a) add the thumbnail images to the same folder where thumbnail images are already stored, or
(b) store the thumbnail images to a different folder than the folder where thumbnail images are already stored.

22. A thumbnail-creation method comprising:
a thumbnail-creation step of creating thumbnail images of image data;
a memory step of pairing up and storing the thumbnail images created by said thumbnail creation step and the medium identifier of the portable recording medium that stored or stores the image data, which is the source of the thumbnail images;
an identifier-judgment step of determining whether or not the medium identifier of the portable recording medium mounted in said mounting unit matches a medium identifier that is stored in said memory unit; and
a control step of controlling at least said thumbnail-creation unit based on the judgment results from said identifier-judgment unit.

23. A program that is executed on a computer comprising:
a thumbnail-creation step of creating thumbnail images of image data;
a memory step of pairing up and storing the thumbnail images created by said thumbnail creation step and the medium identifier of the portable recording medium that stored or stores the image data, which is the source of the thumbnail images;
an identifier-judgment step of determining whether or not the medium identifier of the portable recording medium mounted in said mounting unit matches a medium identifier that is stored in said memory unit; and
a control step of controlling at least said thumbnail-creation unit based on the judgment results from said identifier-judgment unit.
